# EUROPEAN PATENT SPECIFICATION

(11) **EP 2 028 413 B1**
(45) Date of publication and mention of the grant of the patent: **18.04.2012**
(21) Application number: 08252567.6
(22) Date of filing: 29.07.2008
(51) Int. Cl.: F21V 14/04, B60Q 1/068, B62J 6/02, F21W 101/10

(54) **Headlight device and vehicle**
Scheinwerfervorrichtung und Fahrzeug
Dispositif de phare et véhicule

(30) Priority: 22.08.2007 JP 2007215711
(43) Date of publication of application: 25.02.2009
(73) Proprietor: Yamaha Hatsudoki Kabushiki Kaisha, Iwata-shi, Shizuoka 438-8501 (JP)
(72) Inventor: Ohzono, Gen c/o Yamaha Hatsudoki Kabushiki Kaisha, Shizuoka-Ken 438-8501 (JP)
(74) Representative: Moreland, David

(56) References cited:
- EP-A1- 0 661 193
- EP-A2- 0 894 664
- DE-A1- 10 231 162
- US-A- 4 881 152
- US-A- 5 678 915
- US-A1- 2003 169 597
- US-A1- 2007 058 381

## Description

### FIELD OF THE INVENTION

The present invention relates to a headlight device provided with a reflector which reflects light from a bulb and an optical axis adjuster which adjusts a direction of reflected light of the reflector, and a motorcycle provided with the headlight device.

### BACKGROUND TO THE INVENTION

In a known headlight device for a motorcycle, a reflector, to which a bulb is attached, is swingably supported by a casing via a support part. The reflector has an optical axis adjusted by operating an aiming bolt.

Conventional headlight devices include a device including a reflector having an upper side part swingably supported by a casing via a pair of left and right support parts and a lower side part having an extending part downwardly extending. On the extending part, an aiming bolt is disposed. Such an arrangement is disclosed in, for example, JP-A-08-148004

However, since the conventional headlight device has a structure in which the support part for the reflector is far apart from the aiming bolt in an upward-downward direction, unfortunately, the reflector has reduced swinging angle relative to the operation amount of the aiming bolt, and it takes time and labor to adjust the optical axis. When a space between the support part and the aiming bolt is increased, unfortunately, the headlight device easily receives the influence of vibration during traveling to easily change the optical axis of the reflector.

Another headlight device is described in closest prior art document US5678915, which teaches of a headlamp comprising a lamp body and a lens that are coupled together to define a lighting chamber. Disposed in the chamber is a reflector having a bulb centrally mounted thereto. For aiming the headlamp, the reflector is coupled to the lamp body via a pivot connection, a vertical aiming mechanism and a horizontal aiming mechanism. Each of the aiming mechanisms comprise an aiming screw rotatably supported by the lamp body and threaded with a nut. The nut is mounted fast to hollow bosses that project rearwardly from the back of the reflector.

US20070058381 describes a motorcycle headlight system in which an optical axis adjusting bolt is adjustably mounted in a portion of a body of a lamp casing, wherein the bolt has an externally threaded free end engaged adjustably in a nut that is rigidly secured to an integral support lug of a tubular support member of a headlight. The body also includes a fulcrum pin extending into the interior of the lamp casing and a support piece of the second tubular member is tiltably mounted on the fulcrum pin.

The present invention has been made in view of the above conventional circumstance, and it is an object of an embodiment of the present invention to at least mitigate at least some of the identified problems in the art.

### SUMMARY OF THE INVENTION

Various aspects of the present invention are defined in the independent claims. Some preferred features are defined in the dependent claims.

Described herein by independent claim 1 is a headlight device comprising:
a light source;
a reflector having a reflective surface arranged to reflect light from the light source, wherein the reflector has an accommodation recess part;
a casing accommodating the reflector; and
an optical axis adjuster arranged to adjust a direction of light reflected from the reflector, wherein the optical axis adjuster has a support part swingably supporting the reflector to the casing and an adjustment mechanism swinging the reflector to adjust a direction of an optical axis, wherein at least a part of the adjustment mechanism is positioned in the accommodation recess part.

The accommodation recess part is formed by projecting the reflective surface to the light source side with a rear surface of the reflective surface recessed to the light source.

Further, the accommodation recess part is positioned on a centre line as viewed from above.

The dependent claims 2-11 describe the followings features: At least a portion of the light source may be accommodated within the casing.

The light source may be disposed between the support part of the optical axis adjuster and the adjustment mechanism.

Two support parts are provided.

The two support parts and the adjustment mechanism are disposed so as to form an isosceles triangle, wherein the adjustment mechanism is aligned with a top apex of the isosceles triangle.

The isosceles triangle may be an isosceles triangle as viewed from the front of the vehicle.

The isosceles triangle may be a reverse or inverted isosceles triangle in which the adjustment mechanism is positioned on a lower side and the two support parts are positioned on an upper side.

A light shielding part may be formed on a front side of an emitting direction of the accommodation recess part to shield a part of the reflected light.

The headlight device may further comprise a cover surrounding the headlight device. A lens opening may be formed in the cover to forwardly expose a lens. The light shielding part may be formed so as to be positioned in the lens opening.

The light shielding part may be formed by coloring a part of a lens.

The headlight device may further comprise a lens arranged to cover a front of the reflector.

The light source comprises a bulb. The light source may comprise a single bulb. The light source may comprise a plurality of bulbs.

The headlight device may be adapted for use on a straddle-type vehicle.

Also described herein by independent claim 12 is a motorcycle comprising:
a front wheel:
   a headlight device disposed above the front wheel, wherein the headlight device comprises:
      a light source;
      a reflector having a reflective surface arranged to reflect light from the light source, wherein the reflector has an accommodation recess part;
      a casing accommodating the reflector; and
      an optical axis adjuster arranged to adjust a direction of reflected light from the reflector, wherein the optical axis adjuster has a support part swingably supporting the reflector to the casing and an adjustment mechanism swinging the reflector to adjust a direction of an optical axis, wherein at least a part of the adjustment mechanism is positioned in the accommodation recess part.

The adjustment mechanism may be configured to carry out adjustment operation from a rearward facing region of the vehicle.

Described herein is a headlight device for a straddle-type vehicle including:
a bulb as a light source;
a reflector having a reflective surface reflecting light from the bulb;
a casing accommodating the reflector and the bulb;
a lens covering a front of the reflector; and
an optical axis adjuster adjusting a direction of light reflected from the reflector,
wherein the reflector has an accommodation recess part formed by projecting the reflective surface to the bulb side with a rear surface of the reflective surface recessed to the bulb side;
the optical axis adjuster has a support part swingably supporting the reflector to the casing and an adjustment mechanism swinging the reflector to adjust a direction of an optical axis; and
the adjustment mechanism is disposed so that at least a part of the adjustment mechanism is positioned in the accommodation recess part.

In the headlight device of the present invention, the accommodation recess part formed by recessing to the bulb side is formed in the reflector, and the adjustment mechanism adjusting the optical axis of the reflector is disposed so that at least a part of the adjustment mechanism is positioned in the accommodation recess part. Thereby, the adjustment mechanism can be brought close to the bulb by the amount of recession of the accommodation recess part, and a distance between the adjustment mechanism and the support part can be reduced. Therefore, the reflector can be largely swung by a small adjustment amount, and the optical axis can be expeditiously adjusted.

Since the present invention can bring the adjustment mechanism close to the support part, the present invention can suppress the influence of the traveling vibration on the optical axis. That is, the adjustment mechanism, which usually swings the reflector using an adjustment bolt disposed between the reflector and the casing, and the reflector is held at an adjusted position by the biasing force of a spring or washer. However, the biasing force of the spring or washer is not so large, and it is difficult to certainly stop the swinging of the reflector caused by the traveling vibration. The vibration of the reflector becomes larger as the adjustment mechanism goes away from the support part. Since the adjustment mechanism is brought close to the bulb and therefore the support part in the present invention, the swinging of the reflector caused by the traveling vibration can be suppressed.

### BRIEF DESCRIPTION OF THE DRAWINGS

These and other aspects of the present invention will now be described, by way of example only, with reference to the accompanying drawings, in which:
Fig. 1 is a side view of a motorcycle provided with a headlight device according to an embodiment of the present invention;
Fig. 2 is a front view of the motorcycle;
Fig. 3 is a front view of the headlight device;
Fig. 4 is a side view of the headlight device;
Fig. 5 is a plan view of the headlight device;
Fig. 6 is a rear view of the headlight device;
Fig. 7 is a sectional plan view (a sectional view along the line VII-VII of Fig. 3) of the headlight device;
Fig. 8 is a sectional side view (a sectional view along the line VIII-VIII of Fig. 3) of the headlight device;
Fig. 9 a bottom view of a reflector of the headlight device; and
Fig. 10 is a sectional view of an accommodation recess part of the reflector.

### DETAILED DESCRIPTION OF THE DRAWINGS

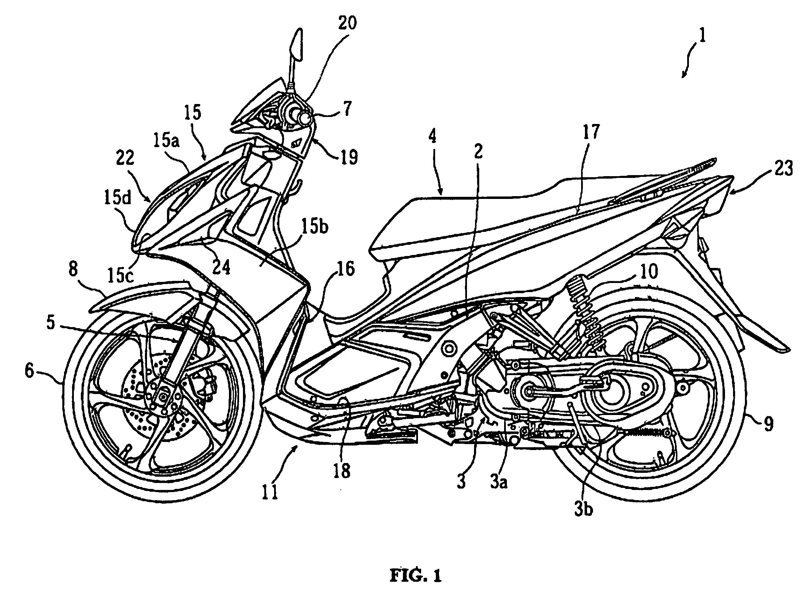

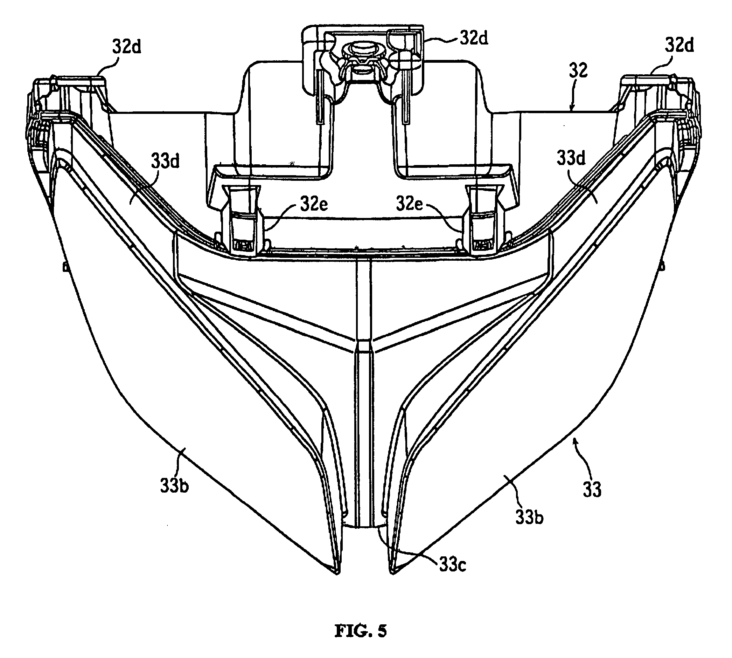

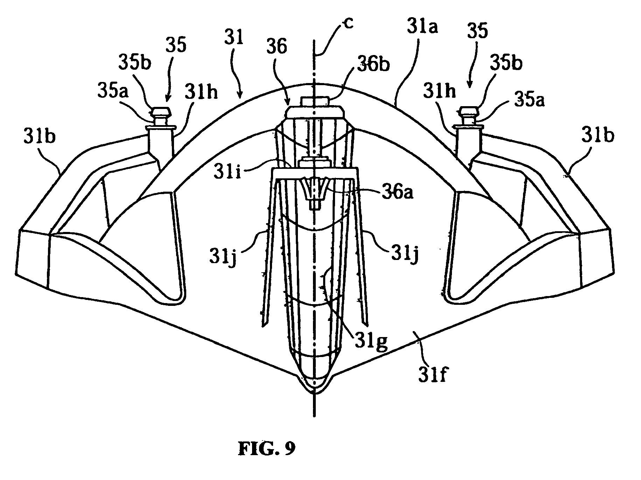

Figs. 1 to 10 are diagrams for describing a headlight device for a motorcycle (straddle-type vehicle) according to an embodiment of the present invention. In the description of the embodiment, the terms "front", "rear", "left" and "right" refer to directions from a perspective of a rider seated on the seat, if not otherwise specified.

In the figures, reference numeral 1 designates a motorcycle, which is provided with an underbone-type vehicle body frame 2, a unit swing type engine unit 3 supported swingably up and down by the vehicle body frame 2, a double ride straddle-type seat 4 mounted on the vehicle body frame 2 above the engine unit 3, and front forks 5 supported by the front end part of the vehicle body frame 2 to afford left and right steering.

The front fork 5 has a lower end part rotatably supporting a front wheel 6 and an upper end part to which a steering handlebar 7 is fixed. A front fender 8 is mounted to the front fork 5 to cover the upper part of the front wheel 6.

The engine unit 3 has a structure in which an engine body 3a and a transmission case 3b accommodating a power transmission mechanism (not shown) are integrated. The transmission case 3b has a rear end part by which a rear wheel 9 is rotatably supported. The transmission case 3b has a rear part connected to the vehicle body frame 2 with a rear cushion 10 therebetween.

The vehicle body frame 2 is covered by a vehicle body cover 11. The vehicle body cover 11 has a front cover 15 covering the front side of the front fork 5, a leg shield 16 disposed on the rear side of the front fork 5 and covering the front of a rider's left and right leg parts, and a side cover 17 covering the lower circumference of the seat 4.

A low-floor type foot board 18 is disposed on the left and right lower end parts of the leg shield 16,

The steering handlebar 7 is surrounded by a handlebar cover 19 where a meter unit 20 is disposed.

A headlight device 22 is disposed on the central part in the front cover 15, and turn signal lights 24 are disposed on the left and right side parts of the front cover 15. A backlight device 23 is disposed on the rear end part of the side cover 17.

The front cover 15 has a front side cover 15a extending obliquely forwardly and downwardly so as to forma substantially continuous surface continuing to the front surface of the meter unit 20 and left and right side covers 15b and 15b extending obliquely rearwardly and downwardly from the left and right lower edges of the front side cover 15a to cover the front wheel 6 from the rear side. The front cover 15 has a substantially V-shape as viewed from the side.

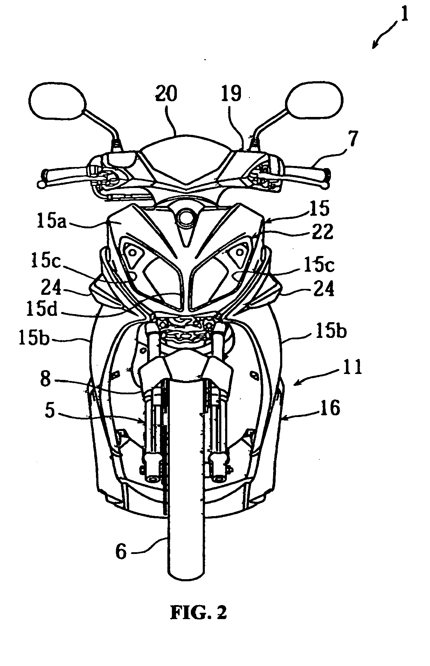

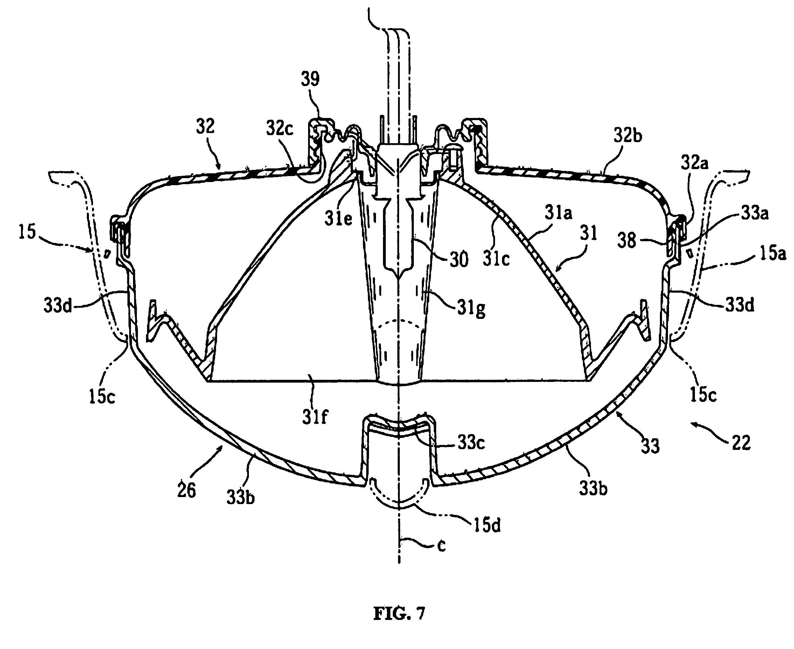

A pair of left and right lens openings 15c are formed in the front side cover 15a. The left and right lens openings 15c are constituted to define a large common opening to the left and right by a central boundary part 15d. The boundary part 15d is positioned on a center line C of the vehicle body of the front side cover 15a (see Figs. 2 and 7).

The left and right lens openings 15c, which have a substantially oval or lozenge shape outwardly extending obliquely upwardly in the vehicle width direction from the boundary part 15d as viewed from the front of the vehicle, have a size spreading in substantially the entire region of the front side cover 15a.

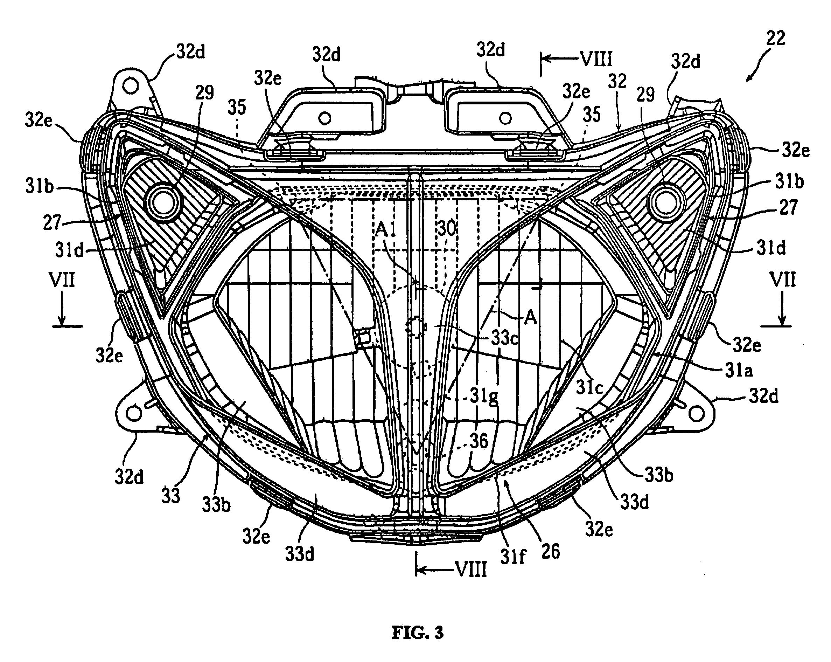

The headlight device 22 has a structure in which a headlight 26 (Fig. 3) perpendicularly positioned above the front wheel 6 in the front cover 15, and consequently positioned at the center in the vehicle width direction and left and right position lights 27 positioned on the left and right rear upper sides of the headlight 26 are integrated.

Herein, the headlight device 22 of the present invention includes the case where the headlight 26 is a simple substance. Alternatively, the headlight device 22 also includes a headlight device integrated with the left and right turn signal lights 24 and a headlight device integrated with both the left and right turn signal lights 24 and the position lights 27.

The left and right position lights 27 have respective left and right position bulbs 29 as a light source. The headlight 26 is provided with a bulb 30 as the light source, a reflector 31 (Fig. 7) forwardly reflecting light from the bulb 30 and the position bulb 29, a casing 32 supporting the reflector 31, a lens 33 covering the front of the reflector 31 and transmitting the reflected light to the front of the vehicle, and an optical axis adjuster 34 for adjusting the direction of the reflected light from the reflector 31.

The casing 32 has a box shape formed so that the reflector 31 is covered from the rear side and forwardly opened. A plurality of mounting pieces 32d formed on the outer peripheral part of the casing 32 are bolted to the front cover 15 and a frame member (not shown).

A groove engaging recess part 32a is formed in the peripheral edge of the opening of the casing 32. A sealing member 38 is interposed in the engaging recess part 32a, and an outer peripheral edge part 33a of the lens 33 is inserted into the engaging recess part 32a. The lens 33 is fittingly fixed to the casing 32 by fitting parts 32e formed at intervals in the peripheral edge of the opening of the casing 32.

The casing 32 has a bottom wall part 32b in which an opening part 32c rearwardly projected is formed. A lid 39 is removably screwed to the opening part 32c. The bulb 30 can be detachably attached from the opening part 32c by removing the lid 39.

The lens 33, which is formed along the left and right lens openings 15c of the front cover 15, has left and right lens bodies 33b forwardly exposing from the lens openings 15c, and light shielding parts 33c and 33d rearwardly stepped down so as to be positioned in the lens openings 15c from the outer peripheral edges of the left and right lens bodies 33b.

The light shielding part 33c positioned between the left and right lens bodies 33b is covered by the boundary part 15d of the front side cover 15a. The remaining light shielding part 33d, which is covered by the peripheral edge of the lens opening 15c of the front side cover 15a, is not to be exposed to the outer environment.

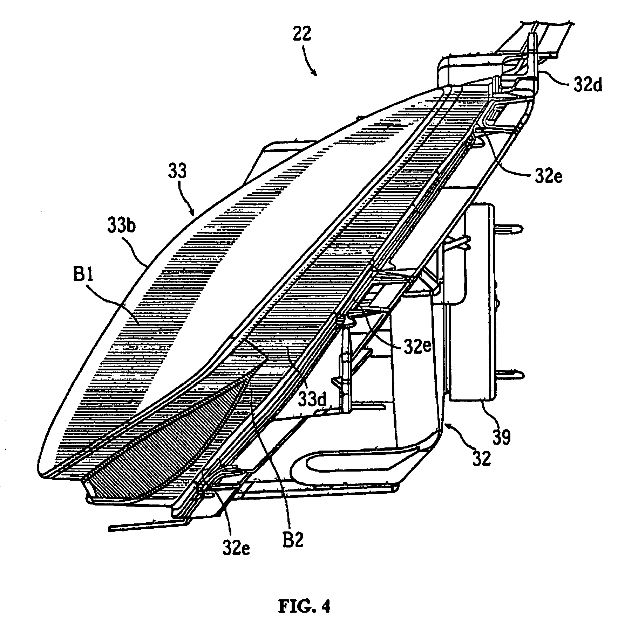

The light shielding parts 33c and 33d, which are formed by applying black color to regions B1 and B2 represented by slant lines in Fig. 4, block light. Fig. 4 shows a state where the color of the light shielding part 33c transmits the transparent lens bodies 33b and the region B1 is exposed.

Thus, the light shielding parts 33c and 33d prevents the reflected light from the reflector 31 from transmitting to the outer environment. As a result, the reflected light from the reflector 31 is forwardly emitted independently from the left and right two lens bodies 33b and 33b.

The reflector 31 has a structure in which a central reflector part 31a and left and right reflector parts 31b are integrally formed. The central reflector part 31a has a reflective surface 31c forwardly reflecting light from the bulb 30 of the headlight 26. The reflector parts 31b have a reflective surface 31d forwardly reflecting light from the position bulbs 29 of the left and left position lights 27.

The central reflector part 31a has a bowl shape having an opening having a substantially circular shape and forwardly formed. The bulb 30 is disposed on a bottom part 31e of the central reflector part 31a.

The left and right reflector parts 31b have a substantially triangle shape outwardly extending obliquely upwardly from the left and right upper side corner parts of the central reflector part 31a. The position bulbs 29 are disposed on the bottom parts of the left and right reflector parts 31b.

The bulb 30 of the headlight 26 is disposed so that the axis line of the bulb 30 corresponds with the center line C of the vehicle body as viewed from above (see Fig. 7). The bulb 30, which is covered by the light shielding part 33c and the boundary part 15d of the front side cover 15a, is hidden from the eye as viewed from the front of the vehicle.

Thus, since the light from bulb 30 is reflected on the central reflector part 31a, and is then emitted from the left and right lens bodies 33b positioned so as to sandwich the central light shielding part 33c, the headlight 26 having one bulb 30 has a two-lamp type appearance.

The optical axis adjuster 34 is provided with a pair of left and right support parts 35 swingably supporting the reflector 31 to the casing 32 in an upward-downward direction, and an adjustment mechanism 36 swinging the reflector 31 to adjust the direction of an optical axis.

The left and right support parts 35 are disposed so as to be in left and right symmetry about the center line C of the vehicle body and be positioned on a side facing the adjustment mechanism 36 with the bulb 30 sandwiched. In detail, the left and right support parts 35 have the following structure.

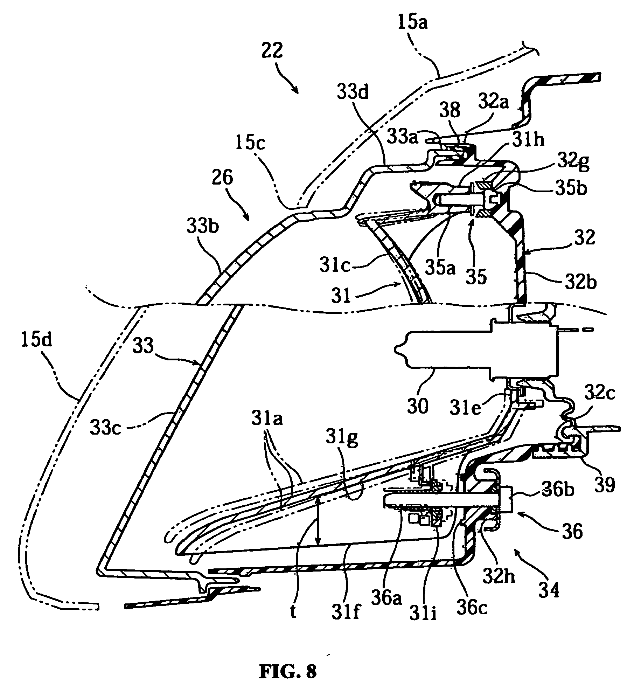

The support parts 35 and 35 are provided with boss parts 31h and support shafts 35a. The boss parts 31h are formed on the left and right end parts of the upper edge part of the central reflector part 31a. The support shafts 35a are inserted and fixed into the left and right boss parts 31h from the rear side. Spherical pivot parts 35b are formed on the rear end parts of the support shafts 35a. The left and right pivot parts 35b are swingably supported by bearing parts 32g formed in the casing 32 (see Fig. 8).

The adjustment mechanism 36, which is disposed so as to be positioned on the center line C of the vehicle body as viewed from above and be positioned below the bulb 30. In detail, the adjustment mechanism 36 has the following structure.

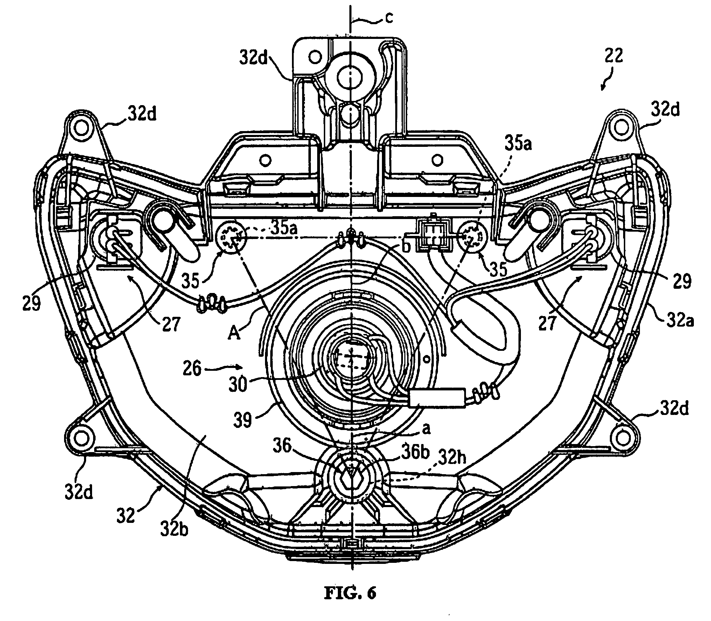

The left and right support parts 35 and the adjustment mechanism 36 are disposed so as to form an isosceles triangle A of which top is at the adjustment mechanism 36. The bulb 30 is positioned slightly lower than the figure center A1 of the isosceles triangle A (see Figs. 3 and 6). The isosceles triangle A is a reverse isosceles triangle in which the adjustment mechanism 36 is positioned on the lower side and the left and right support parts 35 and 35 are positioned on the upper side. In the present invention, the adjustment mechanism and the left and right support parts may be disposed so as to be a right isosceles triangle in which the adjustment mechanism is positioned on the upper side and the left and right support parts are positioned on the lower side.

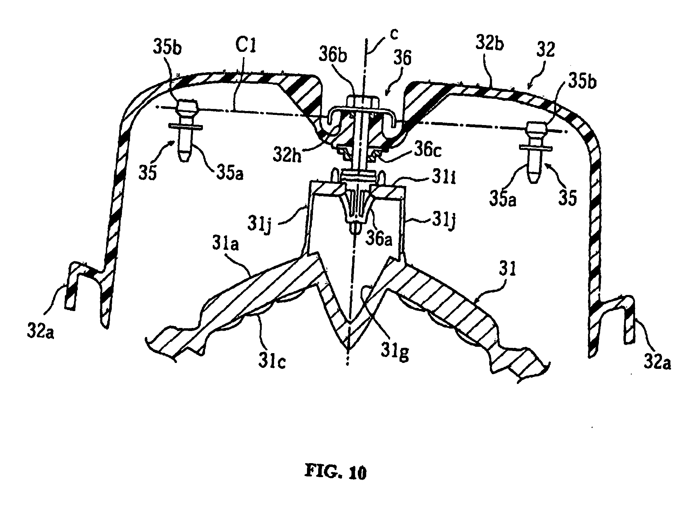

The left and right support parts 35 and the adjustment mechanism 36 are disposed so that at least a part thereof is positioned on a straight line C1 perpendicularly intersecting with the center line C of the vehicle body and extending in the vehicle width direction as viewed from above (see Fig. 10).

An accommodation recess part 31g is formed in a bottom wall part 31f of the central reflector part 31a. The accommodation recess part 31g, which is formed by projecting the reflective surface 31c to the bulb 30 side with the rear surface of the reflective surface 31c recessed to the bulb 30 side, has a tunnel shape.

The accommodation recess part 31g, which is formed over the entire length of the bottom wall part 31f of the central reflector part 31a in the front-rear direction, is formed so that the depth t of the recess part is gradually increased to the rear side from the front side. The accommodation recess part 31g has a tunnel shape as a whole. The accommodation recess part 31g is disposed so as to be positioned on the center line C of the vehicle body as viewed from above. The accommodation recess part 31g, which is covered by the light shielding part 33c and the boundary part 15d of the front side cover 15a as viewed from the front of the vehicle, is not visible externally.

Aplate-like base part 31i is formed so as to be positioned in the accommodation recess part 31g. Left and right leg parts 31j are formed so as to forwardly extend from the left and right side edges of the base part 31i.

The adjustment mechanism 36 is disposed so as to be positioned in the accommodation recess part 31g recessed to the bulb 30 side. The adjustment mechanism 36 is disposed at a position near the bulb 30 and therefore the support part 35 by the amount of the recession. A height size a between the center of the adjustment mechanism 36 and the center of the bulb 30 is substantially the same as a height size b between the center of the bulb 30 and a straight line connecting the left and right support parts 35 with each other (see Fig. 6).

The adjustment mechanism 36 has a nut member 36a and an aiming bolt 36b. The nut member 36a is fixed to the base part 31i of the accommodation recess part 31g, and the aiming bolt 36b is screwed into the nut member 36a. The aiming bolt 36b, which is inserted so as to penetrate a support boss part 32h formed in the casing 32 from the rear side, is rotatably supported by the support boss part 32h. A washer 36c is disposed on the support boss part 32h to hold the aiming bolt 36b at an adjusted position.

In the headlight device 22 of the embodiment, the aiming bolt 36b is rotated by a tool or the like from the rear side of the vehicle between the front cover 15 and the front fender 8 in order to adjust the optical axis. When the aiming bolt 36b is rotated, the reflector 31 vertically swings with the bulb 30 with the left and right support parts 35 as a support point, and thereby the optical axis is changed in the upward-downward direction.

According to this embodiment, the accommodation recess part 31g formed by recessing the bottom wall part 31f to the bulb 30 side is formed in the bottom wall part 31f of the central reflector part 31a. The adjustment mechanism 36 adjusting the optical axis is disposed in the accommodation recess part 31g. Furthermore, the left and right support parts 35 are disposed on the upper side facing the adjustment mechanism 36 with the bulb 30 sandwiched. Thereby, the adjustment mechanism 36 can be disposed near the bulb 30 and therefore the left and right support parts 35 by the amount of the recession of the accommodation recess part 31g. Thus, since the distance between the adjustment mechanism 36 and the left and right support parts 35 can be reduced, the reflector 31 can be largely and vertically swung by operating the aiming bolt 36b only by a small amount, and the optical axis of the headlight 26 can be adjusted in a short time.

Since the adjustment mechanism 36 can be brought close to the bulb 30 and therefore the support part 35 in the embodiment, the influence of the traveling vibration on the optical axis can be suppressed. That is, in the embodiment, the position of the aiming bolt 36b in the axial direction is regulated to the position where the optical axis is adjusted by the washer 36c. However, this washer 36c is difficult to completely stop the swinging of the reflector 31 caused by the traveling vibration. As the space between the adjustment mechanism 36 and the support part 35 is increased, the swinging of the reflector is easily increased. In the embodiment, the space between the adjustment mechanism 36 and the support part 35 can be reduced by the amount of the recession of the accommodation recess part 31g, and thereby the swinging of the reflector 31 caused by the traveling vibration can be reduced, and therefore the influence on the optical axis can be suppressed.

The left and right two support parts 35 are disposed, and the left and right support parts 35 and the adjustment mechanism 36 are disposed so as to form an isosceles triangle whose top is at the adjustment mechanism 36. Thereby, the reflector 31 can be swung without inclining the reflector 31 to the left and the right, and the optical axis can be adjusted with high accuracy. The bias of the reflector 31 to the left and the right caused by the traveling vibration can be regulated.

In the embodiment, the light shielding part 33c is formed in the lens 33 covering the front of the reflector 31, and the front side of the accommodation recess part 31g is covered by the light shielding part 33c. Thereby, the accommodation recess part 31g can be prevented from being viewed from the front, and the leak of the light to the outside from the boundary part between the left and right lens bodies 33b and 33b can be prevented.

In the embodiment, the headlight device 22 is surrounded by the front cover 15, and the left and right lens openings 15c are formed in the front cover 15. The light shielding parts 33c and 33d of the lens 33 are formed so as to be positioned in the left and right lens openings 15c. Thereby, the light reflected on the reflector 31 is emitted only from the left and right lens openings 15c, and the aggravation of the appearance caused by the leak of the reflected light to the outside from the space between the left and right lens openings can be prevented.

Since the light shielding parts 33c and 33d of the lens 33 are colored in black, the leak of the reflected light can be certainly prevented by the simple constitution.

In the embodiment, the headlight device 22 is disposed above the front wheel 6 and the accommodation recess part 31g is disposed directly above the front wheel 6 so as to face the front wheel 6. Thereby, the adjustment mechanism 36 disposed in the accommodation recess part 31g can be easily adjusted. That is, the tool can be inserted into the front cover 15 from the space between the front fender 8 and the front covers 15 to operate the adjustment mechanism 36 from the rear side of the vehicle.

In the embodiment, the left and right support parts 35 are disposed so that the support shaft 35a extends in the front-rear direction, and the pivot parts 35b of the support shaft 35a is swingably supported by the casing 32. However, in the present invention, the support shaft may be disposed so as to extend in the vehicle width direction, and the reflector may be swingably supported around the support shaft.

In the embodiment, the reflector 31 is swung in the upward-downward direction with the left and right support parts 35 as the supporting point. However, in the present invention, the reflector 31 can be swung in the upward-downward direction and in the left-right direction by using one of the left and right support parts as the adjustment mechanism with another support part as the supporting point.

In the embodiment, the headlight device for the motorcycle is described as the example. The headlight device of the present invention is also applicable to straddle-type vehicles such as two-wheeled or three-wheeled vehicles for traveling on rough terrain.

### Description of the Reference Numerals

1: motorcycle (straddle-type vehicle)
6: front wheel
15: front cover (cover)
15c: lens opening
22: headlight device
30: bulb
31: reflector
31c: reflective surface
31g: accommodation recess part
32: casing
33: lens
33c. 33d: light shielding part
34: optical axis adjuster
35: support part
36: adjustment mechanism
A: isosceles triangle
B1, B2: colored region

## Claims

1. A headlight device (22) comprising:
a light source (30);
a reflector (31) having a reflective surface (31c) arranged to reflect light from the light source (30), wherein the reflector (31) has an accommodation recess part (31g);
a casing (32) accommodating the reflector (31); and an optical axis adjuster (34) arranged to adjust a direction of light reflected from the reflector (31), wherein the optical axis adjuster (34) has a support part (35) swingably supporting the reflector (31) to the casing (32) and an adjustment mechanism (36) adapted to swing the reflector (31) to adjust a direction of an optical axis, **characterized in that** at least a part of the adjustment mechanism (36) is positioned in the accommodation recess part (31g), wherein
the accommodation recess part (31g) is formed by projecting the reflective surface (31c) to the light source side with a rear surface of the reflective surface (31c) recessed to the light source;
the accommodation recess part (31g) is positioned on a centre line (C) as viewed from above; and wherein
two support parts (35) are provided and the two support parts (35) and the adjustment mechanism (36) are disposed so as to form an isosceles triangle (A), wherein the adjustment mechanism (36) is aligned with a top apex of the isosceles triangle (A).

2. The headlight device (22) according to claim 1, wherein at least a portion of the light source (30) is accommodated within the casing (32).

3. The headlight device (22) according to claim 1 or 2, wherein the light source (30) is disposed between the support part (35) of the optical axis adjuster (34) and the adjustment mechanism (36).

4. The headlight device (22) according to any preceding claim, wherein the isosceles triangle (A) is an isosceles triangle as viewed from the front.

5. The headlight device (22) according to any preceding claim, wherein the isosceles triangle (A) is an inverted isosceles triangle in which the adjustment mechanism (36) is positioned on a lower side and the two support parts (35) are positioned on an upper side.

6. The headlight device (22) according to any preceding claim, wherein a light shielding part (33c, 33d) is formed on a front side of an emitting direction of the accommodation recess part (31g) to shield a part of the reflected light.

7. The headlight device (22) according to claim 6, further comprising a cover surrounding the headlight device (22), wherein a lens opening is formed in the cover to forwardly expose a lens (33) and the light shielding part is formed so as to be positioned in the lens opening.

8. The headlight device (22) according to claim 6 or 7, wherein the light shielding part is formed by coloring a part of a lens.

9. The headlight device (22) according to any preceding claim, further comprising a lens (33) arranged to cover a front of the reflector (31).

10. The headlight device (22) according to any preceding claim, wherein the light source (30) comprises a bulb.

11. The headlight device (22) according to any preceding claim, adapted for use on a straddle-type vehicle (1).

12. A motorcycle (1) comprising:
a front wheel (6):
a headlight device (22) disposed above the front wheel (6), wherein the headlight device (22) comprises:
a light source (30);
a reflector (31) having a reflective surface (31c) arranged to reflect light from the light source (30), wherein the reflector (31) has an accommodation recess part (31g);
a casing (32) accommodating the reflector (31);; and
an optical axis adjuster (34) arranged to adjust a direction of reflected light from the reflector (31), wherein the optical axis adjuster (34) has a support part (35) swingably supporting the reflector (31) to the casing (32) and an adjustment mechanism (36) is adapted to swing the reflector (31) to adjust a direction of an optical axis, **characterized in that** at least a part of the adjustment mechanism (36) is positioned in the accommodation recess part (31g) and is configured to carry out adjustment operation from a rearward facing region of the vehicle (1), wherein
the accommodation recess part (31g) is formed by projecting the reflective surface (31c) to the light source side with a rear surface of the reflective surface (31c) recessed to the light source;
the accommodation recess part (31g) is positioned on a centre line (C) of the vehicle as viewed from above; and wherein
two support parts (35) are provided and the two support parts (35) and the adjustment mechanism (36) are disposed so as to form an isosceles triangle (A), wherein the adjustment mechanism (36) is aligned with a top apex of the isosceles triangle (A).

## Patentansprüche

1. Scheinwerfervorrichtung (22), die aufweist:
eine Lichtquelle (30);
einen Reflektor (31) mit einer reflektierenden Fläche (31c), die angeordnet ist, um Licht von der Lichtquelle (30) zu reflektieren, wobei der Reflektor (31) ein Aufnahmeaussparungsteil (31g) aufweist;
ein Gehäuse (32), das den Reflektor (31) aufnimmt; und
ein Einstellelement (34) für die optische Achse, das angeordnet ist, um eine Richtung des vom Reflektor (31) reflektierten Lichtes einzustellen, wobei das Einstellelement (34) für die optische Achse ein Tragteil (35), das schwenkbar den Reflektor (31) am Gehäuse (32) hält, und einen Einstellmechanismus (36) aufweist, der ausgebildet ist, um den Reflektor (31) zu schwenken, um eine Richtung einer optischen Achse einzustellen, **dadurch gekennzeichnet, dass** mindestens ein Teil des Einstellmechanismus (36) im Aufnahmeaussparungsteil (31 g) positioniert ist, wobei:
das Aufnahmeaussparungsteil (31g) **dadurch** gebildet wird, dass die reflektierende Fläche (31c) zur Lichtquellenseite vorsteht, wobei eine hintere Fläche der reflektierenden Fläche (31c) zur Lichtquelle ausgespart ist;
das Aufnahmeaussparungsteil (31 g) auf einer Mittellinie (C) positioniert ist, von oben betrachtet; und wobei
zwei Tragteile (35) vorhanden sind und die zwei Tragteile (35) und der Einstellmechanismus (36) so angeordnet sind, dass sie ein gleichschenkliges Dreieck (A) bilden, wobei der Einstellmechanismus (36) mit einem oberen Scheitelpunkt des gleichschenkligen Dreieckes (A) ausgerichtet ist.

2. Scheinwerfervorrichtung (22) nach Anspruch 1, bei der mindestens ein Abschnitt der Lichtquelle (30) innerhalb des Gehäuse (32) aufgenommen wird.

3. Scheinwerfervorrichtung (22) nach Anspruch 1 oder 2, bei der die Lichtquelle (30) zwischen dem Tragteil (35) des Einstellelementes (34) für die optische Achse und dem Einstellmechanismus (36) angeordnet ist.

4. Scheinwerfervorrichtung (22) nach einem der vorhergehenden Ansprüche, bei der das gleichschenklige Dreieck (A) ein gleichschenkliges Dreieck ist, wenn es von vom betrachtet wird.

5. Scheinwerfervorrichtung (22) nach einem der vorhergehenden Ansprüche, bei der das gleichschenklige Dreieck (A) ein umgekehrtes gleichschenkliges Dreieck ist, in dem der Einstellmechanismus (36) auf einer unteren Seite positioniert ist und die zwei Tragteile (35) auf einer oberen Seite positioniert sind.

6. Scheinwerfervorrichtung (22) nach einem der vorhergehenden Ansprüche, bei der ein Lichtabschirmteil (33c, 33d) auf einer vorderen Seite einer Emissionsrichtung des Aufnahmeaussparungsteils (31g) ausgebildet ist, um einen Teil des reflektierten Lichtes abzuschirmen.

7. Scheinwerfervorrichtung (22) nach Anspruch 6, die außerdem eine Abdeckung aufweist, die die Scheinwerfervorrichtung (22) umgibt, wobei eine Linsenöffnung in der Abdeckung gebildet wird, um eine Linse (33) nach vorn freizulegen, und wobei das Lichtabschirmteil so ausgebildet ist, dass es in der Linsenöffnung positioniert wird.

8. Scheinwerfervorrichtung (22) nach Anspruch 6 oder 7, bei der das Lichtabschirmteil durch Färben eines Teils einer Linse gebildet wird.

9. Scheinwerfervorrichtung (22) nach einem der vorhergehenden Ansprüche, die außerdem eine Linse (33) aufweist, die angeordnet ist, um eine Vorderseite des Reflektors (31) abzudecken.

10. Scheinwerfervorrichtung (22) nach einem der vorhergehenden Ansprüche, bei der die Lichtquelle (30) eine Glühlampe aufweist.

11. Scheinwerfervorrichtung (22) nach einem der vorhergehenden Ansprüche, die für eine Verwendung bei einem Grätschsitz-Fahrzeug (1) ausgebildet ist.

12. Motorrad (1), das aufweist:
ein Vorderrad (6);
eine Scheinwerfervorrichtung (22), die über dem Vorderrad (6) angeordnet ist, wobei die Scheinwerfervorrichtung (22) aufweist:
eine Lichtquelle (30);
einen Reflektor (31) mit einer reflektierenden Fläche (31c), die angeordnet ist, um Licht von der Lichtquelle (30) zu reflektieren, wobei der Reflektor (31) ein Aufnahmeaussparungsteil (31g) aufweist;
ein Gehäuse (32), das den Reflektor (31) aufnimmt; und
ein Einstellelement (34) für die optische Achse, das angeordnet ist, um eine Richtung des vom Reflektor (31) reflektierten Lichtes einzustellen, wobei das Einstellelement (34) für die optische Achse ein Tragteil (35), das schwenkbar den Reflektor (31) am Gehäuse (32) hält, und einen Einstellmechanismus (36) aufweist, der ausgebildet ist, um den Reflektor (31) zu schwenken, um eine Richtung einer optischen Achse einzustellen, **dadurch gekennzeichnet, dass** mindestens ein Teil des Einstellmechanismus (36) im Aufnahmeaussparungsteil (31 g) positioniert und ausgebildet ist, um einen Einstellvorgang von einem nach hinten liegenden Bereich des Fahrzeuges (1) aus durchzuführen, wobei:
das Aufnahmeaussparungsteil (31g) **dadurch** gebildet wird, dass die reflektierende Fläche (31c) zur Lichtquellenseite vorsteht, wobei eine hintere Fläche der reflektierenden Fläche (31 c) zur Lichtquelle ausgespart ist;
das Aufnahmeaussparungsteil (31g) auf einer Mittellinie (C) des Fahrzeuges positioniert ist, von oben betrachtet; und wobei
zwei Tragteile (35) vorhanden sind und die zwei Tragteile (35) und der Einstellmechanismus (36) so angeordnet sind, dass sie ein gleichschenkliges Dreieck (A) bilden, wobei der Einstellmechanismus (36) mit einem oberen Scheitelpunkt des gleichschenkligen Dreieckes (A) ausgerichtet ist.

## Revendications

1. Dispositif de phare (22), comprenant :
une source de lumière (30) ;
un réflecteur (31), comportant une surface de réflexion (31c) agencée de sorte à réfléchir la lumière à partir de la source de lumière (30), le réflecteur (31) comportant une partie d'évidement de réception (31g) ;
un boîtier (32) recevant le réflecteur (31) ;
et un moyen d'ajustement de l'axe optique (34) destiné à ajuster une direction de la lumière réfléchie par le réflecteur (31), le moyen d'ajustement de l'axe optique (34) comportant une partie de support (35), supportant de manière oscillante le réflecteur (31) sur le boîtier (32), et un mécanisme d'ajustement (36), destiné à faire osciller le réflecteur (31) pour ajuster une direction d'un axe optique, **caractérisé en ce qu'**au moins une partie du mécanisme d'ajustement (36) est positionnée dans la partie d'évidement de réception (31g), dans lequel
la partie d'évidement de réception (31g) est formée par la débordement de la surface de réflexion (31c) sur le côté de la source de lumière, une surface arrière de la surface de réflexion (31c) étant évidée par rapport à la source de lumière ;
la partie d'évidement de réception (31g) est positionnée sur une ligne médiane (C), vue d'en haut ; et dans lequel
deux parties de support (35) sont prévues, les deux parties de support (35) et le mécanisme d'ajustement (36) étant agencés de sorte à former un triangle isocèle (A), le mécanisme d'ajustement (36) étant aligné avec un sommet supérieur du triangle isocèle (A).

2. Dispositif de phare (22) selon la revendication 1, dans lequel au moins une partie de la source de lumière (30) est reçue dans le boîtier (32).

3. Dispositif de phare (22) selon les revendications 1 ou 2, dans lequel la source de lumière (30) est agencée entre la partie de support (35) du moyen d'ajustement de l'axe optique (34) et le mécanisme d'ajustement (36).

4. Dispositif de phare (22) selon l'une quelconque des revendications précédentes, dans lequel le triangle isocèle (A) est un triangle isocèle vu à partir de l'avant.

5. Dispositif de phare (22) selon l'une quelconque des revendications précédentes, dans lequel le triangle isocèle (A) est un triangle isocèle inversé, dans lequel le mécanisme d'ajustement (36) est positionné sur un côté inférieur, les deux parties de support (35) étant positionnées sur un côté supérieur.

6. Dispositif de phare (22) selon l'une quelconque des revendications précédentes, dans lequel une partie de protection de la lumière (33c, 33d) est formée sur un côté avant d'une direction d'émission de la partie d'évidement de réception (31g) pour protéger une partie de la lumière réfléchie.

7. Dispositif de phare (22) selon la revendication 6, comprenant en outre un couvercle entourant le dispositif de phare (22), une ouverture de lentille étant formée dans le couvercle pour exposer vers l'avant une lentille (33), la partie de protection de la lumière étant formée de sorte à être positionnée dans l'ouverture de lentille.

8. Dispositif de phare (22) selon les revendications 6 ou 7, dans lequel la partie de protection de la lumière est formée en colorant une partie d'une lentille.

9. Dispositif de phare (22) selon l'une quelconque des revendications précédentes, comprenant en outre une lentille (33) destinée à couvrir une partie avant du réflecteur (31).

10. Dispositif de phare (22) selon l'une quelconque des revendications précédentes, dans lequel la source de lumière (30) comprend un bulbe.

11. Dispositif de phare (22) selon l'une quelconque des revendications précédentes, adapté pour un véhicule du type à enfourcher (1).

12. Motocycle (1), comprenant :
une roue avant (6) ;
un dispositif de phare (22) agencé au-dessus de la roue avant (6), le dispositif de phare (22) comprenant :
une source de lumière (30) ;
un réflecteur (31), comportant une surface de réflexion (31c), destinée à réfléchir la lumière à partir de la source de lumière (30), le réflecteur (31) comportant une partie d'évidement de réception (31g) ;
un boîtier (32) recevant le réflecteur (31) ; et
un moyen d'ajustement de l'axe optique (34), destiné à ajuster une direction de la lumière réfléchie par le réflecteur (31), le moyen d'ajustement de l'axe optique (34) comportant une partie de support (35), supportant de manière oscillante le réflecteur (31) sur le boîtier (32), et un mécanisme d'ajustement (36) adapté pour faire osciller le réflecteur (31) pour ajuster une direction d'un axe optique, **caractérisé en ce qu'**au moins une partie du mécanisme d'ajustement (36) est positionnée dans la partie d'évidement de réception (31g) et est destinée à exécuter l'opération d'ajustement à partir d'une région orientée vers l'arrière du véhicule (1), dans lequel
la partie d'évidement de réception (31g) est formée en faisant déborder la surface de réflexion (31 c) vers le côté de la source de lumière, une surface arrière de la surface de réflexion (31) étant évidée par rapport à la source de lumière ;
la partie d'évidement de réception (31g) est positionnée sur une ligne médiane (C) du véhicule, vue d'en haut ; et dans lequel
deux parties de support (35) sont prévues, les deux parties de support (35) et le mécanisme d'ajustement (36) étant agencés de sorte à former un triangle isocèle (A), le mécanisme d'ajustement (36) étant aligné avec un sommet supérieur du triangle isocèle (A).
